# EUROPÄISCHE PATENTSCHRIFT

(11) **EP 1 619 447 B1**
(45) Veröffentlichungstag und Bekanntmachung des Hinweises auf die Patenterteilung: **07.12.2016**
(21) Anmeldenummer: 05014916.0
(22) Anmeldetag: 09.07.2005
(51) Int. Cl.: F24F 1/00, F24F 6/14

(54) **Raumlüftungs- oder Raumklimagerät**
Ventilation and/or air-conditioning device for a room
Dispositif de ventilation et/ou climatisation d'un local

(30) Priorität: 22.07.2004 DE 102004036884
(43) Veröffentlichungstag der Anmeldung: 25.01.2006
(73) Patentinhaber: LTG Aktiengesellschaft, 70435 Stuttgart (DE)
(72) Erfinder: Wagner, Ralf, Dipl.-Ing., 70771 Leinfelden-Echterdingen (DE); Hirsch, Stefan, Dipl.-Ing., 70563 Stuttgart (DE)
(74) Vertreter: Grosse, Rainer

(56) Entgegenhaltungen:
- JP-A- 11 063 586
- JP-A- 62 175 537
- JP-A- 2002 243 221
- US-A- 4 350 286

## Beschreibung

Die Erfindung betrifft ein Raumlüftungs- oder Raumklimagerät gemäß Oberbegriff des Anspruchs 1. Bei diesem Gerät oder dieser Raumlüftungs- oder Raumklimaeinheit handelt es sich um eine raumlufttechnische Einrichtung, die als zentrales Gerät ausgebildet ist, das insbesondere Außenluft von einer Luftzentrale eines Gebäudes oder dergleichen, also von zentraler Stelle erhält, oder es ist als dezentrales Gerät ausgebildet, das insbesondere Außenluft direkt zum Beispiel über einen Durchbruch in der Fassade des Gebäudes/Raumes erhält. Das zentrale oder dezentrale Gerät kann ferner separat ausgebildet oder in eine Klimaeinheit integriert sein. Ferner kann es als reines Umluftgerät ausgebildet sein oder als dezentrales oder zentrales Gerät jeweils mit Umluft.

Es sind Geräte bekannt, die einen Querstromventilator aufweisen und mit einem Wärmetauscher versehen sind. Wird der Wärmetauscher in Betrieb genommen, so lässt sich die Förderluft kühlen oder erwärmen. Demzufolge ist eine Raumklimatisierung möglich. Wird der Wärmetauscher außer Betrieb genommen oder ist kein Wärmetauscher vorhanden, so erfüllt ein derartiges dezentrales Gerät eine Raumlüftungsfunktion. In Abhängigkeit der vom Gerät angesaugten oder dem Gerät zugeführten Luft kann durch die Zuluft zum Raum ein Umluftverfahren und/oder die Zuführung von Frischluft, insbesondere Außenluft, vorgenommen werden.

Aus der JP 11063586 A ist ein Raumlüftungs- oder Klimagerät bekannt, das einen freistehenden Wirbelbildner im Bereich eines Laufrads eines Ventilators aufweist. Im Bereich eines Luftauslasses weist das bekannte Gerät eine Luftbefeuchtungseinrichtung auf.

Der Erfindung liegt die Aufgabe zugrunde, ein Raumlüftungs- oder Raumklimagerät zu schaffen, mit dem ein verbessertes Lüftungs- oder Klimaergebnis erzielt werden kann.

Diese Aufgabe wird erfindungsgemäß dadurch gelöst, dass mindestens eine Nebeleinbringvorrichtung der Luftbefeuchtungseinrichtung am Wirbelbildner angeordnet und/oder teilweise oder vollständig in den Wirbelbildner integriert ist. Mit der Luftbefeuchtung lassen sich die raumlufttechnischen Parameter in besonderer Weise verbessern. So ist es beispielsweise im Winter bei sehr trockener Außenluft möglich, durch die Befeuchtung der Raumluft angenehme Klimaverhältnisse zu schaffen. Da die Luftbefeuchtungseinrichtung dem Wirbelbildner des mit Tangentialventilator versehenen Geräts zugeordnet ist, ergibt sich eine besonders kompakte und einfache Bauform. Ferner wird hierdurch eine gute Verteilung der Feuchtigkeit in der dem Raum zugeführten Zuluft ermöglicht. Die Nebeleinbringvorrichtung führt mit Befeuchtungströpfchen, insbesondere Wassertröpfchen, beladene Luft, also Wassernebel, in den Bereich des Wirbelbildners, so dass der Wassernebel der Zuluft beigemischt und in den Raum eingebracht wird. Eine Anordnung am und/oder teilweise oder vollständige Integration in den Wirbelbildner nutzt das vorhandene Bauteil, nämlich den Wirbelbildner, für eine Doppelfunktion, indem er einerseits die Saug- von der Druckseite des Tangentialventilators trennt und überdies für die Zwecke der Luftbefeuchtung mit verwendet wird.

Die Luftbefeuchtungseinrichtung weist eine Befeuchtereinheit auf. Diese Befeuchtereinheit dient der Nebelerzeugung, wobei eine Ultraschallbefeuchtereinheit und/oder eine Dampfbefeuchtereinheit zum Einsatz gelangen kann. In der Ultraschallbefeuchtereinheit wird insbesondere durch hochfrequente Schwingungen der Wassernebel erzeugt. In der Dampfbefeuchtereinheit befindet sich eine thermische Einrichtung, die den Dampf herstellt.

Eine Weiterbildung der Erfindung sieht vor, dass die Befeuchtereinheit stirnseitig zum Tangentilaventilator innerhalb des Gehäuses angeordnet ist. In Verlängerung der Längserstreckung des Tangentialventilators ist somit die Befeuchtereinheit angeordnet mit der Folge, dass die Bauhöhe und Bautiefe des Gehäuses des Gerätes nicht vergrößert wird. Vielmehr liegt lediglich eine etwas vergrößerte Baulänge vor. Insbesondere bei Unterflurgeräten ist dies von Vorteil. Selbstverständlich kann das erfindungsgemäße Gerät nicht nur als Bodengerät, sondern auch als Brüstungs- oder Deckengerät ausgebildet sein.

Eine Weiterbildung der Erfindung sieht vor, dass die Luftbefeuchtungseinrichtung mittels einer Steuer- und/oder Regelungseinrichtung ein- oder ausgeschaltet oder gesteuert oder geregelt betrieben wird. Das Ein- und Ausschalten kann mittels der Steuereinrichtung erfolgen, wobei entweder nur die volle Stufe eingeschaltet werden kann oder aber auch verschiedene Leistungszwischenstufen wählbar sind. Es ist auch ein kontinuierlicher Betrieb, also stufenfrei, denkbar. Im Falle eines geregelten Betriebes wird in Abhängigkeit einer Sollwertvorgabe ein bestimmtes Befeuchtungsergebnis eingeregelt.

Es ist vorteilhaft, wenn die Luftbefeuchtungseinrichtung in Abhängigkeit von der absoluten Außenluftfeuchte geschaltet beziehungsweise betrieben wird. Bei niedriger absoluter Außenluftfeuchte erfolgt insbesondere selbsttätig (durch Ansprache mindestens eines geeigneten Sensors) eine entsprechende Befeuchtung der Zuluft. Hier kann wiederum ein Schaltbetrieb, Steuerbetrieb und/der Regelbetrieb vorgesehen sein.

Es ist von Vorteil, wenn die Luftbefeuchtungseinrichtung in Abhängigkeit mindestens eines unteren und/oder mindestens eines oberen Grenzwertes der Feuchtigkeit der Raumluft geschaltet beziehungsweise betrieben wird. Wird der untere Grenzwert unterschritten, so wird die Befeuchtung aufgenommen oder verstärkt durchgeführt. Ist der obere Grenzwert erreicht, so wird die Befeuchtung gedrosselt oder ganz ausgeschaltet.

Die Befeuchtungsleistung der Luftbefeuchtungseinrichtung lässt sich insbesondere mittels einer Pulsweitenmodulation steuern beziehungsweise regeln. Die Weite eines Steuerungs- beziehungsweise Regelungspulses kennzeichnet die Intensität und/oder Einsatzdauer der Befeuchtung. Wird somit die Pulsweite entsprechend der gewünschten Befeuchtung geändert, so lässt sich damit das gewünschte Raumluftbefeuchtungsergebnis erzielen.

Die Wassernebeleinbringvorrichtung weist bevorzugt mindestens eine Wassernebelzuführleitung auf, die im Wesentlichen parallel über die Längserstreckung im oder am Wirbelbildner über seine Länge oder eine Teillänge von letzterem verläuft und mit mindestens einem Ausblasquerschnitt auf der Druckseite des Wirbelbildners endet. Die Parallelführung am oder im Wirbelbildner stört die Luftführung innerhalb des Tangentialventilators so gut wie gar nicht, so dass kein erhöhter Druckverlust oder sonstiger strömungstechnischer Nachteil auftritt. Der auf der Druckseite des Wirbelbildners liegende Ausblasquerschnitt oder die dort liegenden Ausblasquerschnitte für den Wassernebel sorgt/sorgen dafür, dass eine Feuchtigkeitsbenetzung der übrigen Baugruppen weitestgehend vermieden wird. Eine Befeuchtung des Laufrades des Tangentialventilators ist somit ausgeschlossen.

Der Ausblasquerschnitt kann von einem Ende der Wassernebelzuführleitung gebildet sein. Es können eine Vielzahl von Wassernebelzuführleitungen und eine dementsprechende Anzahl von Ausblasquerschnitten oder eine sich verzweigende Wassernebelzuführleitung mit Zweigausblasquerschnitten vorhanden sein. Um einen besonders guten Verteilungseffekt des Wassernebels zu erzielen, kann der jeweilige Ausblasquerschnitt auch als Ausblasdüse ausgebildet sein.

Eine Weiterbildung der Erfindung sieht vor, dass der Befeuchtereinheit eine Luftansaugung, insbesondere eine Umluftansaugung, zugeordnet ist, die mit mindestens einer Ansaugöffnung vom Ausblasquerschnitt des Tangentialventilators ausgeht und zur Befeuchtereinheit führt. Die Befeuchtereinheit saugt über die Luftansaugung im Ausblasbereich des Tangentialventilators Luft an, die in der Befeuchtereinheit mit Wassertröpfchen beaufschlagt wird, um den Wassernebel zu erzeugen. Dieser wird dann über die Wassernebelzuführleitung dem Ausblasquerschnitt zugeführt. Wichtig ist, dass die Luftansaugung auf der Druckseite des Ventilators erfolgt.

Nach einer Weiterbildung der Erfindung kann die Ansaugöffnung in einer stirnseitig des Laufrads des Tangentialventilators liegenden Zone angeordnet sein. In diesem seitlichen Bereich des Laufrads, der in Verlängerung der Längserstreckung des Laufrads liegt, wirkt das Ansaugen von der Befeuchtereinheit zuzuführenden Luft nicht störend auf die sonstigen Strömungsverhältnisse des Geräts.

Schließlich kann das Gerät mit mindestens einem Wärmetauscher versehen sein, der in Bezug auf die Luftförderung stromaufwärts zum Tangentialventilator angeordnet ist. Mit ihm kann mittels eines geeigneten Kälte- oder Wärmemittels eine Luftbehandlung zum Zwecke des Kühlens oder Heizens erfolgen. Da der Wärmetauscher stromaufwärts zum Tangentialventilator liegt und der Wirbelbildner des Tangentialventilators mit mindestens einem Befeuchtungs-Ausblasquerschnitt versehen ist, wird der Wärmetauscher nicht mit Feuchtigkeit beaufschlagt und unterliegt damit keiner erhöhten Beanspruchung.

Die Zeichnungen veranschaulichen die Erfindung anhand eines Ausführungsbeispiels und zwar zeigt:
- Figur 1: eine perspektivische Ansicht auf ein dezentrales Raumklimagerät,
- Figur 2: eine Detailansicht des Geräts gemäß Figur 1 und
- Figur 3: eine Seitenansicht des geöffneten Geräts der Figur 1.

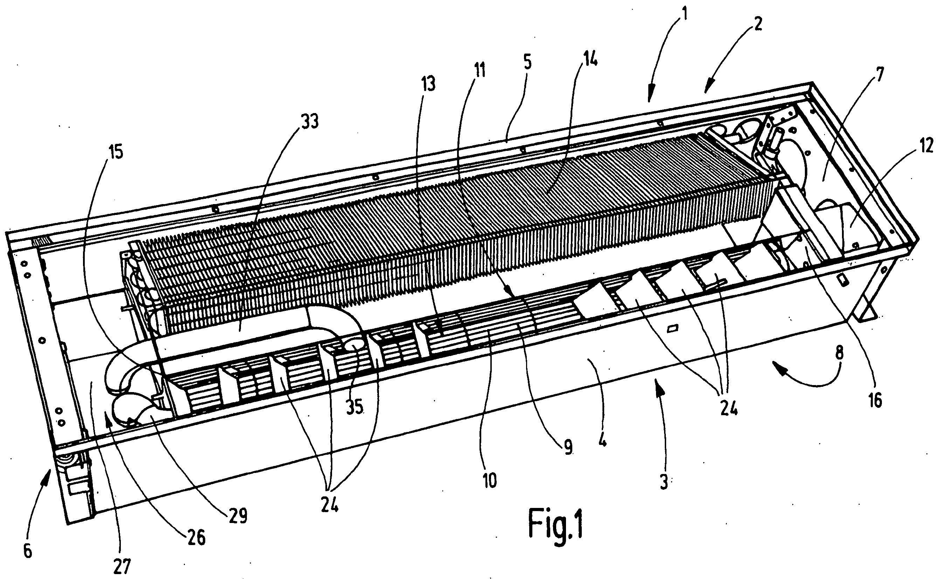

Die Figur 1 zeigt ein dezentrales Raumklimagerät 1, das als Unterflurgerät 2 ausgebildet ist und bevorzugt im Bereich der Fassade eines zu klimatisierenden Raumes eines Gebäudes aufgestellt wird.

Das Raumklimagerät 1 weist ein Gehäuse 3 mit zwei Seitenwänden 4 und 5, zwei Stirnwänden 6 und 7, einer Bodenwand 8 und einer nicht dargestellten Abdeckung auf, die mit einer Lufteintrittsöffnung und einem Zuluftauslass versehen ist.

Im Innern des Gehäuses 3 ist ein Tangentialventilator 9 mit Laufrad 10, Wirbelbildner 11 und elektrischem Antriebsmotor 12 angrenzend an die Seitenwand 4 angeordnet. Der Tangentialventilator 9 ist als Querstromventilator 13 ausgebildet.

Angrenzend an den Tangentialventilator 9 ist im Innern des Gehäuses 3 ein Wärmetauscher 14 positioniert, der von einem Kältemittel oder einem Wärmemittel durchströmbar ist. Stirnseitig des Laufrads 10 sind beidendig Zwischenwände15 und 16 im Innern des Gehäuses 3 angeordnet. Der Wirbelbildner 11 erstreckt sich über die gesamte Länge des Laufrads 10. Der Wärmetauscher 14 kann gleich lang oder länger als der Querstromventilator 13 ausgebildet sein.

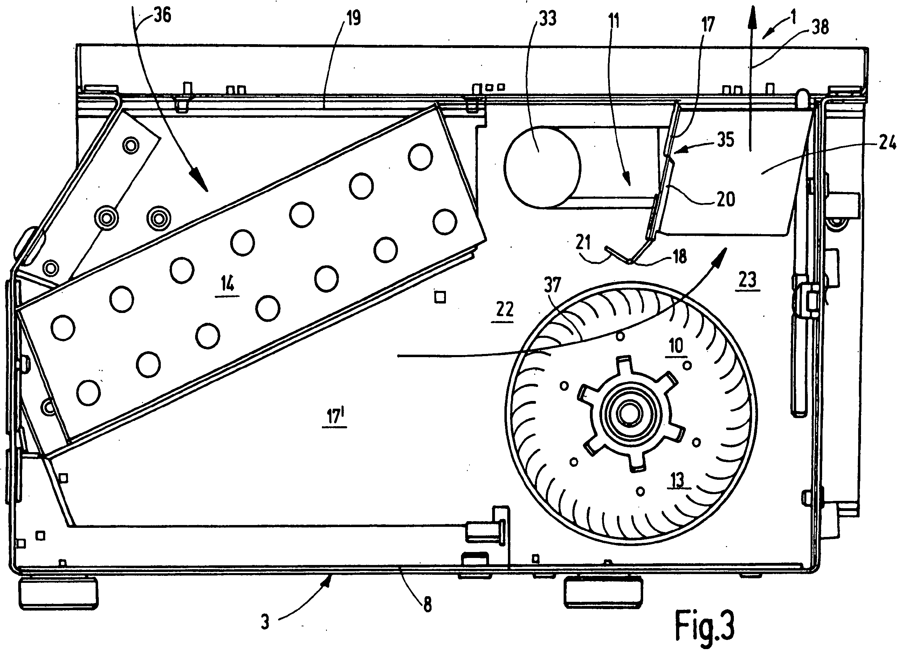

Die Querschnittsansicht der Figur 3 lässt erkennen, dass der Wärmetauscher 14 schräg und mit Abstand von der Bodenwand 8 im Gehäuse 3 angeordnet ist. Unter ihm ist ein Strömungsraum 17' ausgebildet, der in der Figur 3 rechtsseitig von dem Querstromventilator 13 begrenzt wird. Das Laufrad 10 des Querstromventilators 13 liegt relativ nahe zur Bodenwand 8. Oberhalb des Laufrads 10 befindet sich der Wirbelbildner 11 in Form eines -im Querschnitt betrachtetbogenförmigen Profils 17. Vom Laufrad 10 des Querstromventilators 13 betrachtet erstreckt sich das Profil 17 konvex gebogen von oben her kommend bis in eine laufradnahe Position 18 und biegt von dort stark konvex gekrümmt in Richtung auf die Oberseite 19 des Raumklimageräts 1 ab. Demzufolge weist das Profil 17 eine längere Wirbelbildnerwand 20 und eine kürzere Wirbelbildnerwand 21 auf. Der Wirbelbildner 11 trennt die Saugseite 22 von der Druckseite 23 des Querstromventilators 13. An der Wirbelbildnerwand 20 sind -über die Längserstreckung verteilt- Luftleitwände 24 für austretende Zuluft vorgesehen.

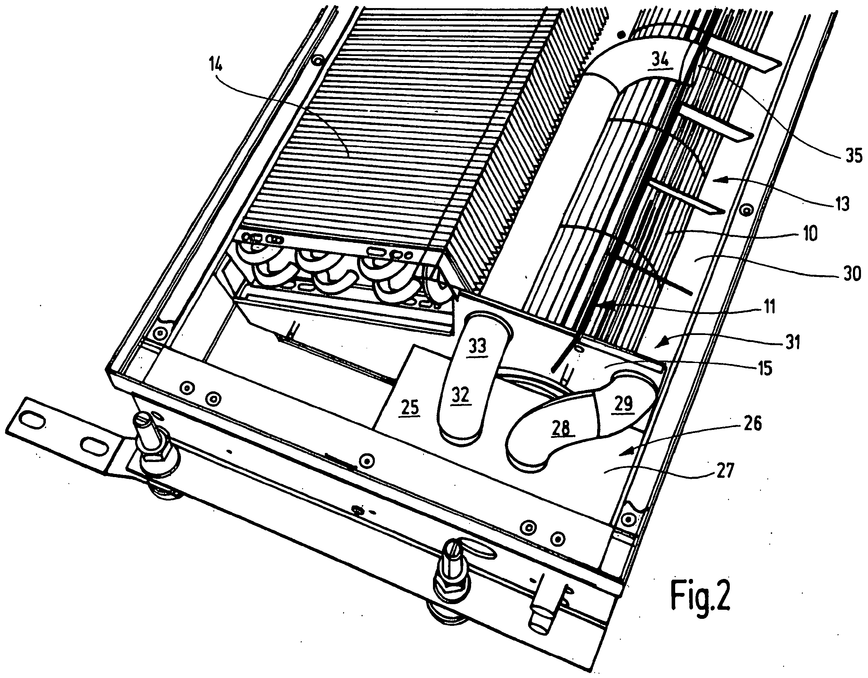

Gemäß der Figuren 1 und 2 ist stirnseitig zum Querstromventilator 13 auf der dem Laufrad 10 abgewandten Seite der Zwischenwand 15 eine Befeuchtereinheit 25 einer Luftbefeuchtungseinrichtung 26 angeordnet. Die Luftbefeuchtungseinrichtung 26 befindet sich im innern des Gehäuses 3. Die Befeuchtereinheit 25 ist als Ultraschallbefeuchtereinheit 27 ausgebildet.

Die Ultraschallbefeuchtereinheit 27 weist eine Luftansaugung 28 auf, von der ein Ansaugrohr 29 von der Befeuchtereinheit 25 bis in den Ausblasquerschnitt 30 des Querstromventilators 13 reicht. Das Ansaugrohr 29 durchsetzt die Zwischenwand 15 und endet dort mit einer Ansaugöffnung 31, die -gemäß Figur 3- im oberen Drittel des Gehäuses 3, etwa auf Höhe der Luftleitwände 24 liegt.

Die Luftbefeuchtungseinrichtung 26 weist ferner eine Wassernebeleinbringvorrichtung 32 auf, die eine Wassernebelzuführleitung 33 besitzt, welche von der Ultraschallbefeuchtungseinheit 27 ausgeht und dann bogenförmig in Richtung auf die Zwischenwand 15 verläuft, letztere durchsetzt und parallel in Zuordnung zur Längserstreckung des Wirbelbildners 11 über etwa ein Drittel der Längserstreckung des Laufrads 10 (Figur 1) verläuft. Im Bereich ihres freien Endes 34 ist die Wassernebelzuführleitung 33 in Richtung auf die Wirbelbildnerwand 20 des Wirbelbildners 11 abgebogen und durchsetzt die Wirbelbildnerwand 20. Auf der Druckseite 23 der Wirbelbildnerwand 20 des Wirbelbildners 11 schließt die Wassernebelzuführleitung 33 mit einem Ausblasquerschnitt 35 ab, wie dieses deutlich aus den Figuren 1 und 2 hervorgeht.

Es ergibt sich folgende Funktion: Für die Klimatisierung des Raumes soll es beispielsweise erforderlich sein, eine Kühlung vorzunehmen. Der Wärmetauscher 14 wird daher mit einem Kältemittel betrieben. Der Querstromventilator 13 befindet sich in Betrieb. Er saugt über die Lufteintrittsöffnung der nicht dargestellten Abdeckung Raumluft 36 an, die die Luftkanäle des Wärmetauschers 14 durchströmt und auf diese Art und Weise mittels des Kühlmittels abgekühlt wird. Die abgekühlte Luft durchsetzt den Raum 17' und gelangt zum Laufrad 10 des Querstromventilators 13 und umströmt dabei den Wirbelbildner 11 (Pfeil 37 in Figur 3). Die Luft strömt nunmehr nach oben und wird durch die Luftleitwände 24 im Hinblick auf ihre Ausströmrichtung beeinflusst. Aus dem Ausblasquerschnitt 35 der Wassernebelzuführung 33 austretender Wassernebel wird von der nach oben strömenden, den Zuluftauslass der Abdeckung durchsetzenden Zuluft 38 mitgenommen, so dass die Zuluft 38 befeuchtet wird.

Der erwähnte Wassernebel (Luft mit winzigen Wassertröpfchen) wird mittels der Ultraschallbefeuchtereinheit 27 erzeugt, indem diese über das Ansaugrohr 29 mittels der Ansaugöffnung 31 Luft im Bereich des Ausblasquerschnittes 30 des Querstromventilators 13 ansaugt und mittels des Ultraschallbefeuchtungsverfahrens mit Wassertröpfchen anreichert. Hierzu ist die Ultraschallbefeuchtereinheit 27 mit einer Wasserzuleitung versehen, wobei zugeleitetes Wasser mittels Ultraschall zerstäubt und der mittels des Ansaugrohres 29 angesaugten Luft zugeführt wird. Der so gebildete Wassernebel wird über die Wassernebelzuführleitung 33 im Bereich des Wirbelbildners 11 bis zum Ausblasquerschnitt 35 geleitet und wird dort dem vom Laufrad 10 des Querstromventilators 13 kommenden Zuluftstrom im Bereich vor der Wirbelbildnerwand 20 des Wirbelbildners 11 zugemischt. Die befeuchtete Zuluft 38 wird in Form von behandelter Umluft in den lufttechnisch zu behandelten Raum zurückgeführt. Natürlich ist es auch möglich, dass zusätzlich oder anstelle der Umluft vom Querstromventilator auch Primärluft, insbesondere Außenluft, angesaugt wird.

Insbesondere kann vorgesehen sein, dass eine Befeuchtungsfunktion nur bei eingeschaltetem Tangentialventilator 9 vorgenommen wird, insbesondere wenn dieser sich auf einer entsprechend hohen Drehzahlstufe mit einer Strömungsgeschwindigkeit der Luft von mindestens 1,5 m/s befindet.

Bevorzugt wird die Befeuchtungsfunktion nur im isothermen Umluftbetrieb oder Heizbetrieb des erläuterten Umluftfancoils vorgenommen, um sicher auszuschließen, dass Tröpfchen des befeuchtenden Wassers zum Wärmetauscher 14 nach innen angesaugt werden und es insofern zum Kurzschluss im Kühlfall kommen kann. Für die Befeuchtung wird entmineralisiertes Wasser, bevorzugt aus einer Osmose-Einheit in bakteriologisch reiner Form verwendet. Es kann auch eine UV-Desinfektionseinheit vorgesehen sein, um das verwendete, vollentsalzte Speisewasser bakteriologisch mittels Ultravioletterstrahlung keimfrei zu machen. Aufgrund der hochfrequenten Schwingungen in der Ultraschallbefeuchtereinheit 27 werden mögliche Bakterien durch Kavitation und hohem Druck vernichtet. Bevorzugt ist ein Speisewasser- Abflussmagnetventil vorgesehen, das nach zirka acht Stunden Stillstand die Befeuchtungskammer der Luftbefeuchtungseinrichtung 26 lehrt. Es handelte sich dabei um einen sogenannten Trockenzellenbetrieb, wobei der Ablauf des erwähnten Zyklus' in der Regelung- oder Steuerung des Raumklimageräts 1 hinterlegt wird. Bei einer Inbetriebnahme der Befeuchtung nach dem Sommer ist ebenfalls entsprechend darauf zu achten, dass sich keine Bakterien bilden und in die Zuluft gelangen. Der Querstromventilator 13 ist bevorzugt mit einer Nachlaufsteuerung versehen, die nach Abschluss der Befeuchtung sicherstellt, dass die Nebelzuleitung und andere befeuchtete Bauteile sicher austrocknen. Für die Sicherheit ist es erforderlich, regelmäßige Wartungen und Inspektionen durchzuführen und gegebenenfalls den Befeuchter mit Desinfektionsmittel zu reinigen.

Es können insbesondere drei verschiedene Regelungskonzepte für den Betrieb verwendet werden. Die Luftbefeuchtungseinrichtung 26 wird bei niedriger absoluter Außenluftfeuchte eingeschaltet. Handelt es sich um mehrere aufgestellte Raumklimageräte 1, so werden alle Geräte zentral eingeschaltet. Alternativ ist es möglich, einen Hygrostat im zu klimatisierenden Raum anzuordnen, der die Befeuchtungsfunktion steuert oder regelt. Unterhalb eines unteren und oberhalb eines oberen Grenzwertes wird die Befeuchtungseinheit aus- beziehungsweise eingeschaltet. Es ist auch ferner zusätzlich oder alternativ möglich, die Befeuchtungsleistung über eine Pulsweitenmodulation der Ultraschallschwingungen der Uttraschallbefeuchtereinheit 27 zu steuern oder zu regeln.

## Patentansprüche

1. Raumlüftungs- oder Raumklimagerät, mit einem Gehäuse, in dem ein, einer Luftförderung dienender, einen Wirbelbildner aufweisender Tangentialventilator, insbesondere Querstromventilator, angeordnet ist, wobei dem Wirbelbildner mindestens eine Luftbefeuchtungseinrichtung zugeordnet ist, **dadurch gekennzeichnet, dass** mindestens eine Wassernebeleinbringvorrichtung (32) der Luftbefeuchtungseinrichtung (26) am Wirbelbildner (11) angeordnet und/oder teilweise oder vollständig in den Wirbelbildner (11) integriert ist.

2. Gerät nach Anspruch 1, **dadurch gekennzeichnet, dass** die Luftbefeuchtungseinrichtung (26) eine Befeuchtereinheit (25) aufweist.

3. Gerät nach Anspruch 2, **dadurch gekennzeichnet, dass** die Befeuchtereinheit (25) eine Ultraschallbefeuchtereinheit (27) ist.

4. Gerät nach einem der vorhergehenden Ansprüche 2 oder 3, **dadurch gekennzeichnet, dass** die Befeuchtereinheit (25) eine Wassernebelbefeuchtereinheit ist.

5. Gerät nach einem der vorhergehenden Ansprüche 2 bis 4, **dadurch gekennzeichnet, dass** die Befeuchtereinheit (25) stirnseitig zum Tangentialventilator (9) innerhalb des Gehäuses (3) angeordnet ist.

6. Gerät nach einem der vorhergehenden Ansprüche, **dadurch gekennzeichnet, dass** die Luftbefeuchtungseinrichtung (26) mittels einer Steuer- und/oder Regelungseinrichtung ein- oder ausgeschaltet oder gesteuert oder geregelt betrieben wird.

7. Gerät nach einem der vorhergehenden Ansprüche, **dadurch gekennzeichnet, dass** die Luftbefeuchtungseinrichtung (26) in Abhängigkeit von der absoluten Außenluftfeuchte geschaltet beziehungsweise betrieben wird.

8. Gerät nach einem der vorhergehenden Ansprüche, **dadurch gekennzeichnet, dass** die Luftbefeuchtungseinrichtung (26) in Abhängigkeit mindestens eines unteren und/oder mindestens eines oberen Grenzwerts der Feuchtigkeit der Raumluft geschaltet beziehungsweise betrieben wird.

9. Gerät nach einem der vorhergehenden Ansprüche, **dadurch gekennzeichnet, dass** die Befeuchtungsleistung der Luftbefeuchtungseinrichtung (26) mittels einer Pulsweitenmodulation gesteuert beziehungsweise geregelt wird.

10. Gerät nach einem der vorhergehenden Ansprüche, **dadurch gekennzeichnet, dass** die Wassernebeleinbringvorrichtung (32) mindestens eine Wassernebelzuführleitung (33) aufweist, die im Wesentlichen parallel über die Längserstreckung im oder am Wirbelbildner (11) über seine gesamte Länge oder eine Teillänge von letzterem verläuft und mit mindestens einem Ausblasquerschnitt (35) auf der Druckseite (23) des Wirbelbildners (11) endet.

11. Gerät nach Anspruch 10, **dadurch gekennzeichnet, dass** der Ausblasquerschnitt (35) eine Ausblasdüse ist.

12. Gerät nach einem der vorhergehenden Ansprüche 2 bis 11, **dadurch gekennzeichnet, dass** der Befeuchtereinheit (25) eine Luftansaugung (28), insbesondere eine Umluftansaugung, zugeordnet ist, die mit mindestens einer Ansaugöffnung (31) vom Ausblasquerschnitt (30) des Tangentialventilators (9) ausgeht und zur Befeuchtereinheit (25) führt.

13. Gerät nach Anspruch 12, **dadurch gekennzeichnet, dass** die Ansaugöffnung (31) auf der Druckseite des Tangentialventilators (9) in einer stirnseitig eines Laufrads (10) des Tangentialventilators (9) liegenden Zone oder in einer Zone parallel zum Laufrad (10) angeordnet ist.

14. Gerät nach einem der vorhergehenden Ansprüche, **gekennzeichnet durch** mindestens einen Wärmetauscher (14), der in Bezug auf die Luftförderung stromaufwärts zum Tangentialventilator (9) angeordnet ist.

15. Gerät nach einem der vorhergehenden Ansprüche 1 bis 14, **dadurch gekennzeichnet, dass** das Gerät als zentrales Gerät ausgebildet ist.

16. Gerät nach einem der vorhergehenden Ansprüche 1 bis 14, **dadurch gekennzeichnet, dass** das Gerät als dezentrales Gerät ausgebildet ist.

17. Gerät nach einem der vorhergehenden Ansprüche, **dadurch gekennzeichnet, dass** das Gerät als Umluftgerät ausgebildet ist.

## Claims

1. A ventilation or air-conditioning device for a room, comprising a housing, in which a tangential fan, in particular a cross-flow fan, is arranged, which serves for an air conveyance and which has a vortex creator wherein at least one air humidification device is assigned to the vortex creator, **characterised in that** at least one water mist introduction device (32) of the air humidification device (26) is arranged on the vortex creator (11) and/or is partially or completely integrated into the vortex creator (11).

2. The device according to claim 1, **characterised in that** the air humidification device (26) has a humidifier unit (25).

3. The device according to claim 2, **characterised in that** the humidifier unit (25) is an ultrasonic humidifier unit (27).

4. The device according to any one of claims 2 or 3, **characterised in that** the humidifier unit (25) is a water mist humidifier unit.

5. The device according to any one of claims 2 to 4, **characterised in that** the humidifier unit (25) is arranged inside the housing (3) frontally to the tangential fan (9).

6. The device according to any one of the preceding claims, **characterised in that** the air humidification device (26) is turned on or off or is operated in a controlled or regulated manner by means of a control- and/or regulation device.

7. The device according to any one of the preceding claims, **characterised in that** the air humidification device (26) is switched or operated, respectively, as a function of the absolute outside humidity.

8. The device according to any one of the preceding claims, **characterised in that** the air humidification device (26) is switched or operated, respectively, as a function of at least one lower and/or at least one upper threshold value of the humidity of the ambient air.

9. The device according to any one of the preceding claims, **characterised in that** the humidifying power of the air humidification device (26) is controlled or regulated, respectively, by means of a pulse width modulation.

10. The device according to any one of the preceding claims, **characterised in that** the water mist introduction device (32) has at least one water mist supply line (33), which runs substantially parallel across the longitudinal extension in or on the vortex creator (11) across the entire length thereof or a partial length of the latter, and which ends with at least one blow-out cross section (35) on the pressure side (23) of the vortex creator (11).

11. The device according to claim 10, **characterised in that** the blow-out cross section (35) is a blow-out nozzle.

12. The device according to any one of the preceding claims 2 to 11, **characterised in that** an air intake (28), in particular a recirculating air intake, which, with at least one suction opening (31), starts at the blow-out cross section (30) of the tangential fan (9) and leads to the humidifier unit (25), is assigned to the humidifier unit (25).

13. The device according to claim 12, **characterised in that** the suction opening (31) is arranged on the pressure side of the tangential fan (9) in a zone located frontally of an impeller (10) of the tangential fan (9) or in a zone parallel to the impeller (10).

14. The device according to any one of the preceding claims, **characterised by** at least one heat exchanger (14), which is arranged upstream to the tangential fan (9), relative to the air conveyance.

15. The device according to any one of the preceding claims 1 to 14, **characterised in that** the device is embodied as central device.

16. The device according to any one of the preceding claims 1 to 14, **characterised in that** the device is embodied as decentralised device.

17. The device according to any one of the preceding claims, **characterised in that** the device is embodied as air recirculation device.

## Revendications

1. Appareil de ventilation de locaux ou de climatisation de locaux avec un logement dans lequel est disposé un ventilateur tangentiel servant au transport d'air, présentant un dispositif de formation de tourbillon, notamment un ventilateur à courant transversal, dans lequel au moins un dispositif d'humidification d'air est associé au dispositif de formation de tourbillon, **caractérisé en ce qu'**au moins un dispositif d'introduction de brouillard d'eau (32) du dispositif d'humidification d'air (26) est disposé sur le dispositif de formation de tourbillon (11) et/ou est partiellement ou entièrement intégré dans le dispositif de formation de tourbillon (11).

2. Appareil selon la revendication 1, **caractérisé en ce que** le dispositif d'humidification d'air (26) présente un module humidificateur (25).

3. Appareil selon la revendication 2, **caractérisé en ce que** le module humidificateur (25) est un module humidificateur à ultrasons (27).

4. Appareil selon une des revendications précédentes 2 ou 3, **caractérisé en ce que** le module humidificateur (25) est un module humidificateur à brouillard d'eau.

5. Appareil selon une des revendications précédentes 2 à 4, **caractérisé en ce que** le module humidificateur (25) est disposé du côté frontal par rapport au ventilateur tangentiel (9) au sein du logement (3).

6. Appareil selon une des revendications précédentes, **caractérisé en ce que** le dispositif d'humidification d'air (26) est allumé ou éteint ou commandé ou exploité de manière régulée au moyen d'un dispositif de commande et/ou de régulation.

7. Appareil selon une des revendications précédentes, **caractérisé en ce que** le dispositif d'humidification d'air (26) est connecté ou exploité en fonction de l'humidité de l'air extérieur absolue.

8. Appareil selon une des revendications précédentes, **caractérisé en ce que** le dispositif d'humidification d'air (26) est connecté ou exploité en fonction d'au moins une valeur limite inférieure et/ou d'au moins une valeur limite supérieure de l'humidité de l'air ambiant.

9. Appareil selon une des revendications précédentes, **caractérisé en ce que** la puissance d'humidification du dispositif d'humidification d'air (26) est commandée ou régulée au moyen d'une modulation d'impulsions en durée.

10. Appareil selon une des revendications précédentes, **caractérisé en ce que** le dispositif d'introduction de brouillard d'eau (32) présente au moins une conduite d'amenée de brouillard d'eau (33) qui s'étend essentiellement parallèlement sur l'étendue longitudinale dans ou sur le dispositif de formation de tourbillon (11) sur sa longueur entière ou une longueur partielle de ce dernier et se termine avec au moins une section transversale de soufflage (35) sur le côté pression (23) du dispositif de formation de tourbillon (11).

11. Appareil selon la revendication 10, **caractérisé en ce que** la section transversale de soufflage (35) est une buse de soufflage.

12. Appareil selon une des revendications précédentes 2 à 11, **caractérisé en ce qu'**une aspiration d'air (28), notamment une aspiration d'air de recirculation, est associée au module humidificateur (25), laquelle part avec au moins une ouverture d'aspiration (31) de la section transversale de soufflage (30) du ventilateur tangentiel (9) et conduit au module humidificateur (25).

13. Appareil selon la revendication 12, **caractérisé en ce que** l'ouverture d'aspiration (31) est disposée sur le côté pression du ventilateur tangentiel (9) dans une zone située du côté frontal d'un rotor (10) du ventilateur tangentiel (9) ou dans une zone parallèle au rotor (10).

14. Appareil selon une des revendications précédentes, **caractérisé par** au moins un échangeur de chaleur (14) qui est disposé par rapport au transport d'air en amont par rapport au ventilateur tangentiel (9).

15. Appareil selon une des revendications précédentes 1 à 14, **caractérisé en ce que** l'appareil est réalisé comme appareil centralisé.

16. Appareil selon une des revendications précédentes 1 à 14, **caractérisé en ce que** l'appareil est réalisé comme appareil décentralisé.

17. Appareil selon une des revendications précédentes, **caractérisé en ce que** l'appareil est réalisé comme appareil de circulation d'air.
